# EUROPEAN PATENT SPECIFICATION

(11) **EP 1 352 945 B1**
(45) Date of publication and mention of the grant of the patent: **02.08.2006**
(21) Application number: 03015250.8
(22) Date of filing: 16.03.1998
(51) Int. Cl.: C10G 11/18, C10G 11/16

(54) **Apparatus for mixing feedstock and catalyst particles**
Einrichtung zur Mischung von Einsatz und Katalysator
Appareillage pour mélanger la charge avec des particules de catalyseur

(30) Priority: 14.03.1997 JP 8237297; 14.03.1997 JP 8237397
(43) Date of publication of application: 15.10.2003
(62) Divisional of application: 98850038.5
(73) Proprietor: Nippon Mitsubishi Oil Corporation, Tokyo (JP); PETROLEUM ENERGY CENTER, Tokyo (JP)
(72) Inventor: Nishida, Syozo, Minato-tu, Tokyo (JP); Fujiyama, Yulchiro, Minato-tu, Tokyo (JP)
(74) Representative: Avellan-Hultman, Olle

(56) References cited:
- DE-B- 1 036 217
- US-A- 4 323 314
- US-A- 5 296 131

## Description

This invention relates to an apparatus for mixing a fluid such as a heavy oil and particles such as a catalyst heated at elevated temperatures.

There are known a reaction system in which solid particles as a catalyst or a heat medium is brought into contact with a reactant. A moving bed type reactor is a typical example of such reaction system which reactor is classified into one utilizing a concentrated fluidized bed (bubbles-fluidized bed) and the other utilizing a high-speed moving bed (fluidized bed). The high-velocity moving bed is used for a reaction in which a solid and a gas must come into contact for a short period of time. Currently, there has been mainly employed an upflow-type high velocity moving bed reactor so-called "riser-type" in a fluid catalytic cracking apparatus used for the production of a gasoline from a feedstock such as a heavy oil. This reactor is capable of reducing contact time with an improvement of a catalyst in ability, leading to an enhancement of selectivity of a final product and suppression in unfavorable excessive cracking reaction.

US-A-4,323,314 discloses an apparatus for adding a liquid component to a pourable powdered or granular material, suitable for mixing a fluid with catalyst particles, in which the pourable material is supplied over a deflector, after which it trickles downwards in the form of a hollow cylindrical stream, falling freely, and is sprayed with the liquid components by means of at least one nozzle as it falls.

DE-A-1,036,217 discloses an apparatus for cracking hydrocarbons with a short contacting time comprising a cylindrical vessel, a fluidized bed disposed above the vessel for feeding a continuous stream of fluidized particles to the reaction vessel, two cylindrical slots in the bottom of the fluidized bed for forming two concentrical and hollow cylindrical streams falling downs through the reaction vessel, one central nozzle to spray the inner side of the internal cylindrical particle stream with liquid and four nozzles disposed in the vessel wall to spray the outer surface of the external cylindrical particle stream with liquid. However, the nozzles are arranged to spray a particle stream with a liquid from horizontal or transverse direction with respect to said particle stream.

Recently, a strong demand has been made for an enhancement in selective productivity of a gasoline or a light olefin and an investigation has been conducted for use of a downflow type high velocity moving bed reactor which is free from backmixing affecting adversely an improvement of the selectivity.

Upon production of a gasoline from a feedstock such as a heavy oil using a fluid catalytic cracking apparatus equipped with the existing upflow-type reactor having a high speed moving bed, the contact reaction therein takes several seconds. Whereas upon production of a light olefin the reaction time is required to be reduced in the order of ranging from 0.1 to 1.5 seconds. A rapid mixture of a feed stock and a catalyst and vaporization thereof at the inlet port of a reactor is indispensable in order to conduct the contact reaction in a short period of time. Furthermore, it has become necessary to increase a recycle ratio of a catalyst to an oil to compensate for a reduction in conversion involved with a shortened reaction time. From view of this background, there has been demanded an apparatus which is capable of rapid mixture and vaporization of the feed stock and the catalyst at the inlet of the existing upflow type reactor forming a high speed moving bed and enables a recycle ratio of a catalyst to an oil as several times as greater than that (catalyst / oil ratio of 5 - 8) of a catalytic cracking apparatus for producing a gasoline from a feedstock such as a heavy oil.

With the foregoing difficulties of the prior art in view, the present invention seeks to provide an apparatus which is capable of mixing a fluid and a solid particle uniformly and rapidly.

According to the invention, there is provided an apparatus for mixing the fluid of a feedstock such as a heavy oil and the particles of a catalyst gasifying the fluid which comprises:
a plurality of stand pipes extending vertically,
a distributing device connected to each upper portion of said pipes for distributing uniformly the particles introduced into said device, into each of said pipes,
a mixing section positioned below said distributing device and connected to each lower portion of said pipes extending from the device,
a plurality of dispersing plates arranged in said mixing section and below each of said stand pipes for dispersing the particles falling there from outwardly in a radial direction and
a fluid feed chamber arranged in said mixing section in surround relation to the outer periphery of each of the stand pipes to spray the fluid over the entire outer periphery of the cylindrical particles falling from each of the stand pipes.

It is necessary for a short contact reaction to conduct a rapid uniform mixture of and vaporization of a feed stock and particles (catalyst) at the inlet of a reactor. Therefore, it is required to supply a feed stock in the form of fine droplet, for example by means of spray and to disperse uniformly a catalyst in the form of solid particles. The uniform mixture can be effected in a wide space but fails to be fully accomplished in a limited space. An extensive research and development to seek an alternative for solving the problem results in the following conclusion.

In this alternative solution, after a feedstock in droplet form is fined tc some extent by means of a spray nozzle, the sprayed feedstock is brought into collision with solid particles so as to be further fined by impact caused by the collision. Importantly, solid particles are increased in surface area as large as possible so that the surface thereof can entirely collide with the sprayed feedstock. Hereinafter, it is described as to what kind of shape the particles take to have a large surface area in a limited size of space.

The above and other features and advantages of the invention will be better understood from reading the following detailed description with reference to the accompanying drawings.
FIG. 15 is a sectional view of an apparatus embodying the invention.
FIG. 16 is a cross sectional view taken along the line A - A of FIG. 15.
FIG. 17 is a cross sectional view taken along the line B - B of FIG. 15.
FIG. 18 is a schematic view of main portion of an apparatus according to the invention.
FIG. 19 is cross sectional view taken along the line C - C of FIG. 18.

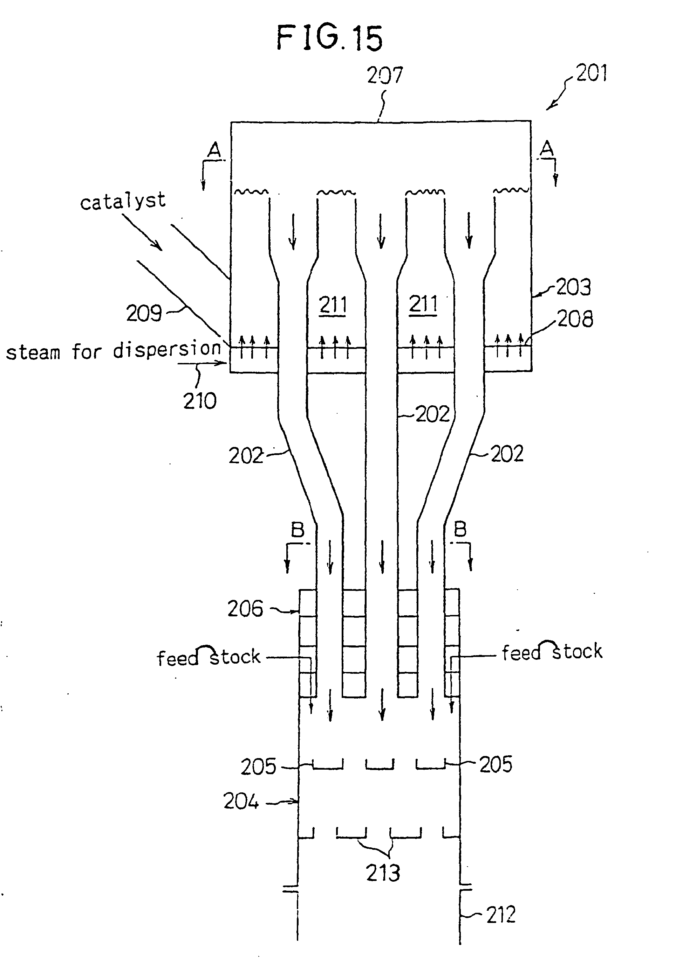

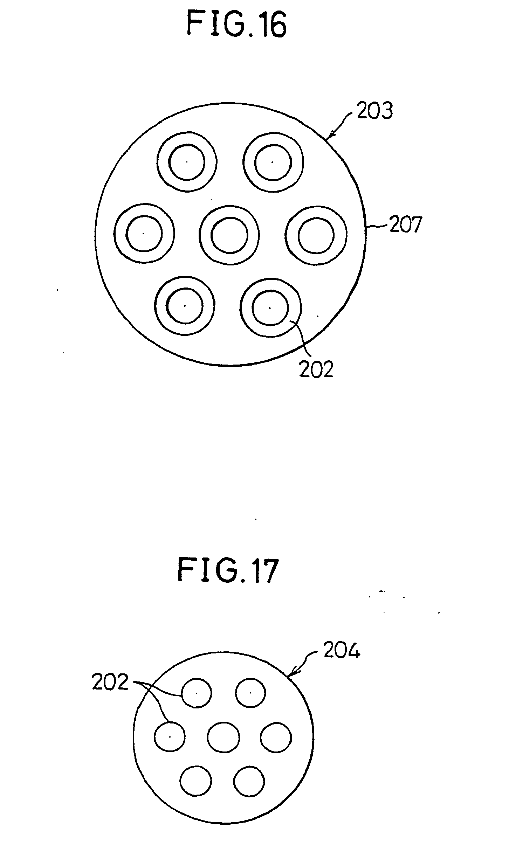

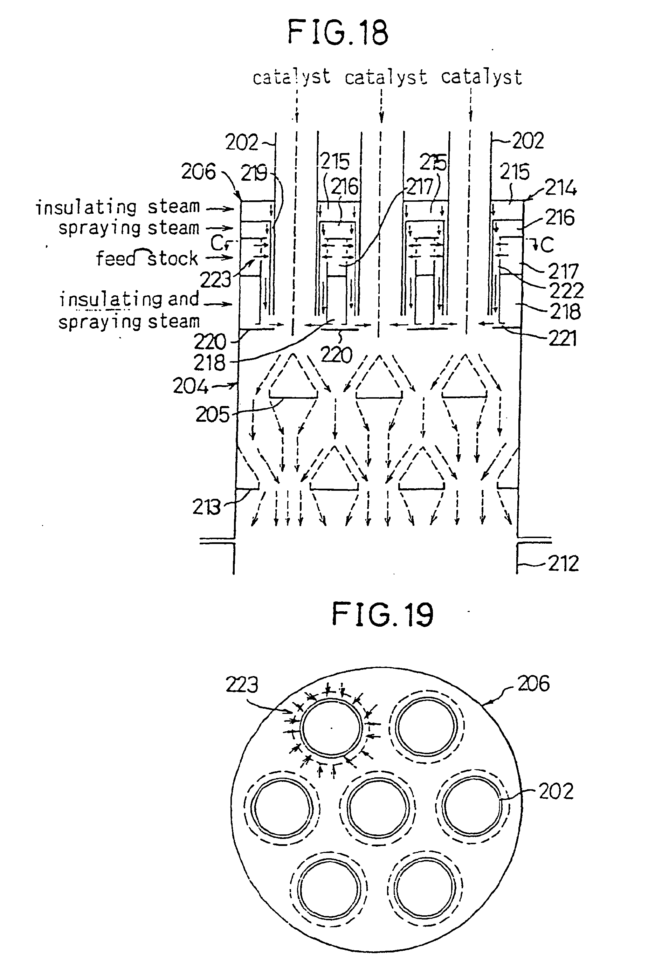

Referring now to FIG. 15 -19, there is shown an embodiment of the inventive mixing apparatus 201.

The mixing apparatus 201 shown in FIG. 15 comprises essentially a distributing device 203, a plurality of standpipes 202 each having an upper potion extending vertically through the bottom of and up to the upper section of a distributing device 203, a mixing section 204 into which catalyst particles flow downwardly from the standpipes each having the lower portion into the mixing section 204, a plurality of plates 205 disposed in the mixing section 204 and below the lower part of the standpipes to disperse the particles fed therefrom in the radial direction and a fluid-feed chamber 206 disposed in the mixing section to spray a fluid such as a feedstock (heavy oil) so as to mix the same with the particles.

The distributing device 203 is not restricted to the construction if it can distribute particles uniformly into the standpipes. In the embodiment shown in FIG. 15, fluidized bed is used to distribute the particles.

The distributing device 203 includes a chamber 207 which is vertical and may be round, polygonal or rectangle in a cross-section. The chamber 207 in FIG. 15 is cylindrical and provided in the lower portion with a porous-plate type distributor or a pipe grid distributor. In this embodiment, a porous plate 208 is employed. The side wall of the chamber 207 is connected with a feed pipe for feeding particles of such as a silica-alumina catalyst having a diameter of 1-50 µm and heated at a temperature of 450-700°C to the porous plate. The lower portion of the chamber 207 is connected with a fluidized gas feed pipe 210 for feeding a fluid gas such as steam, air or inactive gas through the porous plate 208 into the chamber 207 to fluidize the particles so as to form a fluidized particle bed 211. Each of the plurality of standpipes 202 extends vertically through the bottom of the chamber 207 and the porous plate 208 and has an upper tip extending as far as the mid-section of the chamber 207.

Although not restricted, the standpipes are disposed 3 to 30, preferably 3 to 7 in numbers. The standpipes should be arranged at certain intervals in the chamber 207. In FIG. 16, for instance, there are disposed seven pieces of the standpipes, six of which are arranged to be spaced equally apart (60°) in the circumferential direction and one of which is arranged to be on the center. The diameter of each stands pipes 202 is selective depending upon the feed rate of particles. However, needless to mention, under the conditions that the diameter of a reactor 212 described hereinafter and the number of the stand pipes are constant, the diameter thereof is increased with the feed rate of particles increased and decreased with the feed rate of the same reduced. The flow ratio of a catalyst to an oil is in the range of 5 - 50, preferably 20 - 30. The ratio less than 5 would result in an insufficient reaction due to a reduction in contacting time. The ratio exceeding 50 would involve a problem such as pressure loss and erosion.

Disposed below the chamber 207 is a mixing section 204 for mixing a feedstock and the catalyst particles into which the lower tip of each of the stand pipes extends as far as the upper portion of the mixing section 204. Therefore, the fluidized particles pass through the mixing section 204 downwardly. The mixing section 204 is in the form of a cylinder and connected at the lower portion with a reactor 212 (vertical downward-flow type reactor) having the same diameter as that of the mixing section.

The plurality of plates 205 for dispersing the particles flowing from the stand pipes 203 in the circumferential direction are disposed therebelow and in the middle section of the mixing section 204. These plates 205 are arranged at the same horizontal level. Although not restricted, the plates may be in the shape of a disk having a diameter which is the same as or larger than that of the lower end of the stand pipe or having the center recessed lower than the level of the outer periphery, a dish-shape disk or a cone.

Furthermore below these plates there are disposed another plurality of plates 213 for further dispersing the particles falling down from the dispersing plates 205, at the same horizontal level. These dispersing plates 213 should be arranged in such a position that the particles flow densely, for which instance the dispersing plates 213 are arranged below the spaces between the dispersing plates 205 as shown in FIG.15. The dispersing plates may be those which are the same as or different from the dispersing plates 205 located in the upper stream. In FIG. 15, the dispersing plates 205 and 213 are arranged in a single tier, respectively. Preferred number of tiers is within the range of 1 to 5, because too many tiers could increase mixing efficiency but result in pressure loss.

A fluid-feed chamber 206 is provided in the mixing chamber in surround relation to the outer periphery of the stand pipes 202 to spray a feedstock such as a heavy oil. As long as the fluid-feed chamber 206 sprays a feedstock over the entire outer periphery of particles flowing in the form of such as a cylinder, the chamber 206 is not restricted to its structure. The spraying angle is selective from 0 (horizontal direction) to 90°C (vertical direction) as shown in FIGS. 15 and 18. More specifically, the fluid-feed chamber 206 in FIG. 15 is constructed to spray a feedstock downwardly in close proximity of and in parallel relation to the outer periphery of the particles flowing cylindrically from the stand pipes so that the sprayed feedstock comes into contact with particles after being dispersed by the plates 205 and 213.

In FIG. 18, the fluid-feed chamber 206 sprays a feedstock at an angle of 0°, i.e. in parallel with respect to a horizontal level by using a spraying medium such as gas and steam.

The fluid-chamber 206 is also provided with an insulating means 214 as shown in FIG. 18. In the upper portion of the mixing section 204, there is provided with trays 215-218 which contain a steam for thermal insulation, a steam for spraying, a feedstock and a steam for thermal insulation and spraying, respectively. These trays 215- 218 are arranged in vertically superposed relation to one after another and in surround relation to the stand pipes. Therefore, the stand pipes extend through these trays 215-218. Between the superimposed trays 215 - 218 and the outer periphery of each of the stand pipes, there is provided small cylindrical spaces or clearances 219 the upper portion of which is communicated with the thermal insulation steam tray 215 so that a thermal insulating steam flows downwardly along the outer periphery of each of the stand pipes 202 so as to effect thermal insulation of a feedstock from heat of the stand pipes.

Disposed below the thermal-insulating and spraying steam tray 218 is a partition 220 for thermal insulation extending in a horizontal direction and formed to be directed to the lower ends of the stand pipes. More specifically, this partition 220 is in the form of a disk provided with circular openings at the positions in conforming with the lower ends of the stand pipes. A clearance 221 is provided between the partition 220 and the thermal insulating and spraying steam tray 218 such that the steam therefrom flows through the clearance 221 inwardly in the radial direction to thermally insulate the inside of the mixing section and the feedstock fed from the feedstock tray 217. The insulating means 214 is constituted by the trays 215 and 218. The insulating means 214 is not restricted to its construction as long as it can thermally insulate a feedstock from the heat of the stand pipes.

A cylindrical spraying chamber 222 is provided around the space 219, the upper portion of which chamber is communicated with the spraying steam chamber 216 so that the steam of a spraying medium therefrom can flow downwardly through the chamber 222 at high velocity. A multiplicity of spraying nozzles 223 are provided on the side wall of the feedstock tray 217 so that the feedstock therefrom is sprayed into the spraying chamber 222 to be mixed with steam. The resulting mixture collides with the thermal insulating partitions 221 and then flows horizontally over the entire cuter periphery of the particles fed from the stand pipes. The mixture is sprayed at an angle ranging from 0° (horizontally) to 90° (vertically), preferably from 0° to 45°. This angle can be varied by altering the angle of the pertition 220. in the embodiment shown in FIG. 18, the mixture is sprayed at an angle of 0°, i.e. horizontally. As shown in FIG. 19, a plurality of spraying nozzle 223 are disposed at certain intervals in the circumferential direction to spray a feedstock entirely to the spraying chamber. The number of tiers on which each plurality of spraying nozzles 223 are disposed, spaced equally apart vertically, is selective within the range between 1 and 6, preferably 1 and 3.

The operation conducted by using the apparatus in FIG. 15 is now described hereinbelow.

Catalyst particles are fed continuously onto the porous plate 208 through the feed pipes 209 and then fluidized by fluid gas to be formed into the fluidized bed 211. By forming the fluidized bed 211 in this way, the particles fed excessively on a particular spot can be dispersed toward a part on which has less particles while being fluidized so that the particles can be dispersed in uniform density in a horizontal direction.

As the fluidized particles bed becomes increased in height, a part of the particles flows into the stand pipes 202 beyond the upper edges thereof from the all circumferential direction. Since the particles uniformed in density in a horizontal direction in such a manner are increased in height and then flows into the plurality of stand pipes, the particles in an equal amount can be distributed into each of the stand pipes.

The particles in each of the stand pipes flow downwardly through the lower opening to the mixing section 204.

The particles further flow down consecutively in the mixing section 204. The particles thus flow in the form of a cylinder although depending on the amount of the particles. Therefore, almost all the particles collide with the dispersing plates 205 and then dispersed in the outer radial direction. For example, in the case of using the plate 205 in the form of a disk or a dish, the particles are piled up thereon in the form of a cone widened downwardly and having an angle of response of around 20° as indicated by dot-lines in FIG. 18 so that the particles falling onto the piles fall along the slopes thereof outwardly in the radial direction. In the case of using the disk or dish like plates 205 having the depressed center, the particles collecting in the middle of the plates 205 function as a cushion to absorb the impact exerted by the particles falling from the stand pipes, leading to an advantage with respect to erosion.

Therefore, the dispersion of the particles is conducted in an effective manner by dispersing the particles falling from the plurality of the stand pipes with the corresponding plates outwardly in the radial direction.

In the embodiment shown in FIG. 15, a feedstock is sprayed vertically from the fluid-feed chamber 206 in close proximity of and in surrounding relation to the outer periphery of the particle fed cylindrically from each of the stand pipes. Whereupon, the feedstock can be sprayed without coking due to the insulating means 214 provided in the fluid-feed chamber 206 which can thermally insulate the feed stock from the catalyst particles heated at a temperature of 450 - 700°.

The feedstock sprayed in this manner is then collided with the particles dispersed outwardly in the radial direction and further finely scattered by impact upon the collision so that the feedstock can be mixed uniformly and rapidly with the particles. The resulting mixture is improved in contact efficiencies and the vaporization of the feedstock can be effected sufficiently. Furthermore, due to the plurality of the dispersion plates 205 and 213 provided in a multitier, the particles are further dispersed and come to contact (collide) with the feedstock, resulting in further enhancement of contact efficiency leading to the mixture effected in a satisfactory manner. The resulting mixture flows downwardly into the reactor 212.

In the fluid-feed chamber 206 constructed as shown in FIG. 18, a steam fed from the spraying steam tray 216 flows into the upper portion of the spraying chamber 222 and then flows downwardly thereinside at high velocity and at the same time the feedstock in the feedstock tray 217 is sprayed into the spraying chamber 222 to be mixed with the steam therein. The mixture is brought into collision with the partition 221 and sprayed together with the steam fed from the thermal insulating and spraying steam tray 218 over the entire outer periphery of the particles fed in the form of a cylinder from each of the stand pipe in a horizontal direction. Namely, the feedstock is sprayed at right angle with respect to the flow direction of the particles fed cylindrically from each of the stand pipes 202.

The feedstock sprayed in this manner is further fined by the collision with the particles fed cylindrically and then flows downwardly after being scattered to the neighborhood of the outer periphery of the particles. The particles are dispersed in the outer radial direction by the dispersing plates 205 and collide again with the fined feed stock so that the feedstock is further finely scattered, leading to an efficient dispersion of the feed stock.

Therefore, the catalyst particles and the feedstock can be mixed uniformly and rapidly and contacted each other efficiently because the catalyst particles are distributed evenly to the plurality of stand pipes 202 and dispersed by the dispersing plates after passing through the stand pipes 202 and the feedstock comes into contact with the dispersed particles and then finely scattered. The inventive apparatus is applicable to the case where the catalyst particles is used in the larger proportion to the feedstock, maximumly 50 in the ratio therebetween.

Furthermore, the contact reaction can be conducted uniformly for an extremely short period of time due to the capability of reduction in time (approximately 0.1 to 1.5 second) for contacting a feedstock with catalyst particles such that unfavorable excess cracking reaction can be avoided, leading to the capability of the production of a gasoline enhanced in quality.

The invention will be further described by way of the following examples which are provided only for illustrative purposes.

### Experiment 3

There was used an apparatus (Apparatus F) in the form as shown in FIG. 18 which was made from transparent vinyl chloride. The principal dimensions of this apparatus are shown in Table 3.

There were used particles of a catalyst generally used in a flowing catalytic cracking apparatus producing a gasoline from a heavy oil. The catalyst was 63 microns in an average particle size and 0.85 g/cm³ in a bulking density. Air at normal temperature was used as a fluid to be sprayed instead of a feed stock.

The experimental conditions were established on the assumption that mixing and gasification had just completed by spraying a feedstock to catalyst particles heated at a temperature of 600°C but the reaction had not occurred yet. The experimental conditions based on the assumption were changed in a feed rate of catalyst from 50 kg/min to 350 kg/min and a feed rate of air from 20 m³/h to 120 m³/h. The air was fed by from the second, third and forth spraying nozzles arranged vertically in tiers with the feed rate of each of the nozzles varied. The mixability was observed by using a video camera and viewing.

### Example 9

There were conducted the above-described experiments using Apparatus F and the results thereof were as follows:
(1) It was observed that the catalyst particles from the dispersing device flowed uniformly into the stand pipes disposed seven in number.
(2) The mixability was fairy excellent due to the provision of the dispersing plates although the air was only fed from the feed chamber but not fed form the tray.
(3) The dispersion of the particles was improved with the feed rate of air from the tray increased.
(4) Under the conditions where the feed rate of air from each of the nozzles was constant, the mixability was improved with the feed rate of air from the forth nozzles increased.

### Example 10

The experiments were conducted using the two-dimensional model of Apparatus F of which primary dimensions were the same as that of Apparatus F and were 1 cm in thick.

The feed rates of particles and air were one fifteenth of those in Example 9 to be conformity with the ratio of the sectional area of the Apparatus F to that of the model. The mixability was observed by using a video camera and by viewing as well as Example 9. The results were as follows:
(1) The particles from the feed chamber were flow uniformly into the stand pipes disposed seven in number. However, the particles mostly tended to flow the outside but not the center of the stand pipes when fed at a low rate.
(2) Although the effect of the dispersing plates arranged in two tiers was recognized, the mixability was not satisfactory when the air was fed only from the feed chamber but not from the tray. The mixability was extremely improved with the feed rate of air from the tray increased.
(3) The mixability was improved with the feed rate of air from the forth tray increased as well as Example 9.
(4) The particles passed through the stand pipes fell onto the dispersing plates and were formed into a mountain having a response angle of around 20°. The dispersing plates used in this example were in the form of a shallow tray. The particles accumulated on the plates played a role as a cushion in absorbing the impact caused by the particles falling from the stand pipes. This is advantageous to avoid erosion.

**TABLE 3**

| **Dimensions of Apparatus** | |
|---|---|
| | Apparatus |
| Diameter of Dispersing Device mm | 320 |
| Diameter of Standpipe mm | 30 |
| Diameter of Mixing Section mm | 160 |
| Diameter of Dispersing Plate mm | 30 |
| Diameter of Reactor mm | 160 |
| Diameter of Nozzle mm | 2 |
| Number of Nozzles (16x2x7) | 224 |

## Claims

1. An apparatus (201) for mixing the fluid of a feedstock such as a heavy oil and the particles of a catalyst gasifying the fluid which comprises:
a plurality of stand pipes (202) extending vertically,
a distributing device (203) connected to each upper portion of said pipes for distributing uniformly the particles introduced into said device, into each of said pipes (202),
a mixing section (204) positioned below said distributing device (203) and connected to each lower portion of said pipes extending from the device,
a plurality of dispersing plates (205) arranged in said mixing section and below each of said stand pipes for dispersing the particles falling there from outwardly in a radial direction and
a fluid feed chamber (206) arranged in said mixing section in surround relation to the outer periphery of each of the stand pipes to spray the fluid over the entire outer periphery of the cylindrical particles falling from each of the stand pipes.

2. The apparatus (201) according to claim 1 wherein the fluid feed chamber (206) is arranged in said mixing section in surround relation to the outer periphery of each of the stand pipes to spray the fluid downwardly in a vertical direction in close proximity of and in surround relation to the entire outer periphery of the cylindrical particles falling from each of the stand pipes so as to collide with the particles after being dispersed by the plates.

3. The apparatus (201) according to claim 1 or 2 wherein said fluid feed section is a spraying device for spraying the fluid using a spray medium such as steam and air.

4. The apparatus (201) according to any one of the preceding claims wherein a thermal insulating means (214) is provided in surrounding relation to said stand pipes to prevent the fluid sprayed from being affected by the heat of the particles heated at a temperature of over 300°C in the stand pipes.

5. The apparatus (201) according to claim 4 wherein a disc shape plate (220) is disposed below said thermal insulation means and has openings just under the lower ends of the stand pipes.

6. The apparatus (201) according to claim 1 or 2 wherein said mixing section (204) is provided below said plates with another plurality of plates (213) for further dispersing the particles dispersed by said upper plates (205), disposed at least where the particles fall in an increased density.

## Patentansprüche

1. Vorrichtung (201) zum Mischen des Fluids eines Rohmaterials, wie beispielsweise eines Schweröls, und der Partikel eines Katalysators, der das Fluid vergast, umfassend:
mehrere Standleitungen (202), die sich vertikal erstrecken,
eine Verteilungsvorrichtung (203), die jeweils mit einem oberen Bereich der Leitungen verbunden ist, um die, in die Vorrichtung eingeführten, Partikel jeweils auf die Leitungen (202) gleichmäßig zu verteilen,
ein Mischteil (204), das unterhalb der Verteilungsvorrichtung (203) angeordnet ist, und jeweils mit einem unteren Bereich der Leitungen, die sich von der Vorrichtung erstrecken, verbunden ist,
mehrere Dispergierungsplatten (205), die in dem Mischteil und jeweils unterhalb der Standleitungen angeordnet sind, um die Partikel, die dort von außerhalb hereinfallen, in einer radialen Richtung zu dispergieren und
eine Fluid-Zuführkammer (206), die in dem Mischteil in einer umgebenden Beziehung zu dem Randgebiet der jeweiligen Standleitungen angeordnet ist, um das Fluid über die gesamte äußere Umgebung der zylindrischen Partikel zu sprühen, die aus den jeweiligen Standleitungen fallen.

2. Vorrichtung (201) nach Anspruch 1, bei welcher die Fluid-Zuführkammer (206) in dem Mischteil in einer umgebenden Beziehung zu dem Randgebiet der jeweiligen Standleitungen angeordnet ist, um das Fluid abwärts in einer vertikalen Richtung in die nahe Umgebung zu sprühen von und in eine umgebende Beziehung zu dem gesamten Randgebiet der zylindrischen Partikel, die aus den jeweiligen Standleitungen fallen, um mit den Partikeln zu kollidieren, nachdem sie durch die Platten dispergiert wurden.

3. Vorrichtung (201) nach Anspruch 1 oder 2, bei welcher der Fluid-Zuführteil eine Sprühvorrichtung ist, um das Fluid zu versprühen durch Benutzen eines Sprühmediums, wie beispielsweise Dampf und Luft.

4. Vorrichtung (201) nach einem der vorhergehenden Ansprüche, bei welcher ein thermisches Isolierungsmittel (214) bereitgestellt ist in umgebender Beziehung zu den Standleitungen, um das versprühte Fluid davor zu bewahren, durch die Wärme der auf eine Temperatur von über 300°C in den Standleitungen erwärmten Partikel beeinträchtigt zu werden.

5. Vorrichtung (201) nach Anspruch 4, bei welchem eine scheibenförmige Platte (220) unterhalb des thermischen Isolierungsmittels angeordnet ist und Öffnungen aufweist, die sich unter den unteren Enden der Standleitungen befinden.

6. Vorrichtung (201) nach Anspruch 1 oder 2, bei welcher das Mischteil (204) unterhalb den Platten bereitgestellt wird mit mehreren anderen Platten (213), um die durch die oberen Platten (205) dispergierten Partikel weiter zu dispergieren, die wenigstens dort angeordnet sind, wo die Partikel mit einer vergrößerten Dichte fallen.

## Revendications

1. Un dispositif (201) pour mélanger le fluide d'une charge, tel que du fioul lourd, et les particules d'un catalyseur gazéifiant le fluide, comprenant :
une pluralité de tubes (202) verticaux, s'étendant verticalement,
un dispositif de distribution (203), relié à chaque partie supérieure desdits tubes, pour distribuer uniformément les particules introduites dans ledit dispositifs dans chacun desdits tubes (202),
une section de mélange (204) positionnée au-dessous dudit dispositif distributeur (203) et connecté à chaque partie inférieure desdits tubes s'étendant depuis le dispositif,
une pluralité de plaques de dispersion (205), agencées dans ladite section de mélange et au-dessous de chacun desdits tubes verticaux, pour disperser les particules, tombant à cet emplacement depuis l'extérieur, en direction radiale, et
une chambre d'alimentation en fluide (206) agencée dans ladite section de mélange en relation d'entourage envers la périphérie extérieure de chacun des tubes montants pour pulvériser le fluide sur la totalité de la périphérie extérieure des particules cylindriques tombant de chacun des tubes montants.

2. Le dispositif (201) selon la revendication 1, dans lequel la chambre d'alimentation en fluide (206) est agencée dans ladite section de mélange, en relation d'entourage envers la périphérie extérieure de chacun des tubes montants, pour pulvériser le fluide vers le bas en direction verticale, à proximité immédiate de, et en relation d'entourage envers, la totalité de la périphérie extérieure des particules cylindriques tombant de chacun des tubes montants, pour produire une collision avec les particules, après qu'elles aient été dispersées par les plaques.

3. Le dispositif (201) selon la revendication 1 ou 2, dans lequel ladite section d'alimentation en fluide est un dispositif de pulvérisation, servant à la pulvérisation du fluide, en utilisant un milieu de pulvérisation, tel que de la vapeur et de l'air.

4. Le dispositif (201) selon l'une quelconque des revendications précédentes, dans lequel des moyens d'isolation thermique (214) sont prévus, en relation d'entourage envers les tubes montants, pour empêcher que le fluide pulvérisé ne soit affecté par la chaleur des particules, chauffées à une température supérieure à 300°C dans les tubes montants.

5. Le dispositif (201) selon la revendication 4, dans lequel une plaque discoïde (220) est disposée au-dessous desdits moyens d'isolation thermiques et présente des ouvertures, juste au-dessous des extrémités inférieures des tubes montants.

6. Le dispositif (201) selon la revendication 1 ou 2, dans lequel ladite section de mélange (204) est munie, au-dessous des dites plaques, d'une autre pluralité de plaques (213), pour disperser encore plus les particules dispersées par les dites plaques supérieures (205), disposées au moins là où les particules tombent en une densité accrue.
